Europäisches Patentamt

European Patent Office

Office européen des brevets

(19)

(11) **EP 0 658 996 B1**

(12) **EUROPÄISCHE PATENTSCHRIFT**

(45) Veröffentlichungstag und Bekanntmachung des Hinweises auf die Patenterteilung:
**22.03.2000 Patentblatt 2000/12**

(51) Int. Cl.[7]: **H04L 9/06**

(21) Anmeldenummer: **93810875.0**

(22) Anmeldetag: **14.12.1993**

(54) **Verfahren und Einrichtung zum Sichern der Information eines Datenpaketes**

Method and apparatus to secure the information of a data packet

Procédé et appareil de sécurisation d'information d'un paquet de données

(84) Benannte Vertragsstaaten:
**AT BE CH DE DK ES FR GB GR IE IT LI LU MC NL PT SE**

(43) Veröffentlichungstag der Anmeldung:
**21.06.1995 Patentblatt 1995/25**

(73) Patentinhaber:
**Landis & Gyr Technology Innovation AG
6301 Zug (CH)**

(72) Erfinder: **Schaub, Thomas
CH-6330 Cham (CH)**

(56) Entgegenhaltungen:
**EP-A- 0 422 757**

• **COMPUTER, Bd.10, Nr.6, Juni 1977, LONG BEACH US Seiten 74 - 84 DIFFIE & HELLMAN 'Exhaustive Cryptoanalysis of the NBS Data Encryption Standard'**
• **1984 INTERNATIONAL ZÜRICH SEMINAR ON DIGITAL COMMUNICATIONS, März 1984, NY,USA Seiten 163 - 169 MASSEY ET AL 'A Self-Synchronizing Digital Scrambler for Cryptographic Protection of Data'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Sichern der Information eines Datenpaketes sowie auf eine Einrichtung zur Durchführung des Verfahrens gemäss den Oberbegriffen der Ansprüche 1 und 6.

Solche Verfahren werden vorteilhaft bei der Übertragung von Datenpaketen in einem Datennetzwerk verwendet, in welchem ein Stromversorgungsnetz als Übertragungsmedium eingesetzt ist, was auch als "Power Line Carrier Datanetwork" bezeichnet wird.

Durch das Sichern der Information bei der Übertragung von Datenpaketen über ein Übertragungsmedium, welches von Dritten leicht benutzbar ist, wird die Information gegen unerwünschtes Lesen und Auswerten durch Dritte geschützt. Im weiteren wird durch das Sichern die Authentizität der Information beim Empfänger überprüfbar, so dass beispielsweise ein durch Dritte dupliziertes Datenpaket vom Empfänger erkannt werden kann.

Es ist eine Einrichtung zur Verschlüsselung bzw. Entschlüsselung von Datenströmen bekannt (US 4 543 646), welche den Data Encryption Standard (DES) anwendet (Federal Information Processing Standards Publication No. 46), was eine Strukturierung der Datenströme in 64-Bit-Einheiten voraussetzt und technisch relativ aufwendig ist.

Für die Verschlüsselung von Datenströmen, die in kleine Biteinheiten bzw. Datenworte strukturiert sind, ist ein sogenanntes "Cipher-Feedback-System" bekannt (D. W. Davies and W.L. Price, Security for Computer Networks, John Wiley and Sons Ltd, New York 1984).

Der Erfindung liegt die Aufgabe zugrunde, ein mit kostengünstigen Mitteln ausführbares Verfahren zum Sichern der Information eines Datenpaketes zu schaffen und eine Einrichtung anzugeben, welche nach diesem Verfahren arbeitet.

Die genannte Aufgabe wird erfindungsgemäss durch die Merkmale des Anspruchs 1 und 6 gelöst. Vorteilhatte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1   eine Teilnehmerstation mit einer Einrichtung zum Sichern der Information eines Datenpaketes,

Fig. 2   ein Kommunikationsnetz mit mehreren Exemplaren der Teilnehmerstation,

Fig. 3   ein Datenflussdiagramm zu einem Verfahren zum Sichern der Information eines Datenpaketes,

Fig. 4   eine Einrichtung zur Verschlüsselung eines Datenpaketes und

Fig. 5   eine Einrichtung zur Entschlüsselung eines Datenpaketes.

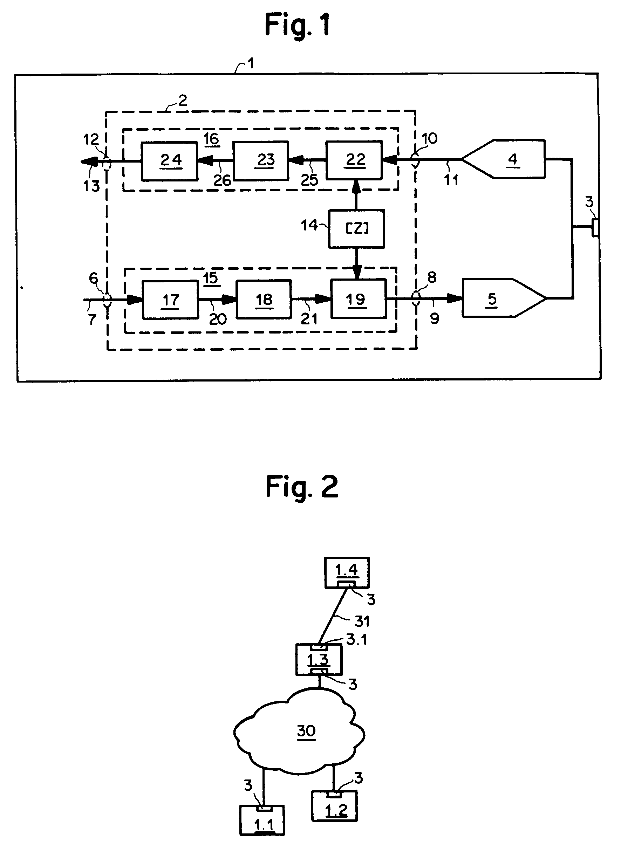

In der Fig. 1 bedeutet 1 eine als Sende- und Empfangseinrichtung ausgebildete Teilnehmerstation, welche mindestens eine Einrichtung 2 zum Sichern der Information von Datenpaketen, mindestens einen Anschluss 3 für ein in der Fig. 1 nicht dargestelltes Übertragungsmedium, ein eingangsseitig mit dem Anschluss 3 verbundenes Eingangsmodul 4 und ein ausgangsseitig mit dem Anschluss 3 verbundenes Ausgangsmodul 5 aufweist.

Die Einrichtung 2 zum Sichern der Information von Datenpaketen verfügt über einen ersten Dateneingang 6 für einen ersten Datenstrom 7 mit ungesicherter Information, einen ersten Datenausgang 8 für einen zweiten, zum Ausgangsmodul 5 führenden Datenstrom 9 mit gesicherter Information, einen zweiten Dateneingang 10 für einen dritten, vom Eingangsmodul 4 gelieferten Datenstrom 11 mit gesicherter Information und einen zweiten Datenausgang 12 für einen vierten Datenstrom 13 mit ungesicherter Information.

Im weiteren weist die Einrichtung 2 zum Sichern der Information eines Datenpaketes eine Speichereinheit 14 mit einem gespeicherten Schlüssel Z, eine erste, zwischen dem ersten Datenstrom 7 und dem zweiten Datenstrom 9 liegende Transformationskette 15 und eine zweite, zwischen dem dritten Datenstrom 11 und dem vierten Datenstrom 13 liegende Transformationskette 16 auf.

Die erste Transformationskette 15 weist einen ersten Transformationsblock 17, einen zweiten Transformationsblock 18 und eine Einrichtung 19 zum Verschlüsseln von Datenpaketen auf, welche in der Reihenfolge ihrer Aufzählung hintereinander verkettet sind, wobei ein fünfter Datenstrom 20 zwischen dem ersten Transformationsblock 17 und dem zweiten Transformationsblock 18 und weiter ein sechster Datenstrom 21 zwischen dem zweiten Transformationsblock 18 und der Einrichtung 19 zum Verschlüsseln von Datenpaketen übertragbar sind.

Die zweite Transformationskette 16 umfasst eine Einrichtung 22 zum Entschlüsseln von Datenpaketen, einen dritten Transformationsblock 23 und einen vierten Transformationsblock 24, welche in der Reihenfolge ihrer Aufzählung hintereinander verkettet sind, wobei ein siebter Datenstrom 25 zwischen der Einrichtung 22 zum Entschlüsseln von Datenpaketen und dem dritten Transformationsblock 23 und weiter ein achter Datenstrom 26 zwischen dem dritten Transformationsblock 23 und dem vierten Transformationsblock 24 übertragbar sind.

Die beiden Einrichtung 19 und 22 zum Verschlüsseln bzw. Entschlüsseln von Datenpaketen sind derart mit der Speichereinheit 14 verbunden, dass der Schlüssel Z durch die beiden Einrichtungen 19 und 22 lesbar ist.

Die Fig. 2 zeigt ein Kommunikationsnetz 30 mit drei Exemplaren der Teilnehmerstation 1. Eine maximale Anzahl Exemplare der Teilnehmerstation 1 im Kommunikationsnetz 30 ist grundsätzlich nicht begrenzt. Ein bestehendes Verteilungsnetz für elektrische Energie - ein sogenanntes Stromversorgungsnetz - ist als Übertragungsmedium des Kommunikationsnetzes 30 mit Vorteil einsetzbar.

Eine erste Ausführung 1.1, eine zweite Ausführung 1.2 und eine dritte Ausführung 1.3 der Teilnehmerstation 1 sind je über den Anschluss 3 mit dem Übertragungsmedium des Kommunikationsnetzes 30 verbunden. Die dritte Ausführung 1.3 ist eine Variante, welche zwei Exemplare der Einrichtung 2 (Fig. 1) zum Sichern eines Datenpaketes und auch je zwei Exemplare des Eingangsmoduls 4 und des Ausgangsmoduls 5 aufweist, wobei das zweite Exemplar der Einrichtung 2 zum Sichern eines Datenpaketes über das zweite Exemplar des Eingangsmoduls 4 und über das zweite Exemplar des Ausgangsmoduls 5 mit einem weiteren Anschluss 3.1 verbunden ist.

Eine vierte Ausführung 1.4 der Teilnehmerstation 1 ist über eine Übertragungseinrichtung 31 mit der dritten Ausführung 1.3 verbunden, wobei die Übertragungseinrichtung 31 am Anschluss 3 der vierten Ausführung 1.4 und am Anschluss 3.1 der dritten Ausführung 1.3 angeschlossen ist.

Die Übertragungseinrichtung 31 ist beispielsweise ein Telephonnetz.

Im Kommunikantionsnetz 30 oder über die Übertragungseinrichtung 31 werden beispielsweise ein Steuerbefehl und/oder Messwerte zwischen den als Sende - und Empfangseinrichtung ausgebildeten Ausführungen 1.1, 1.2, 1.3 und 1.4 der Teilnehmerstation 1 übermittelt, wobei die übertragene Information - im Beispiel der Steuerbefehl oder die Messwerte - vor der Übermittlung in der Einrichtung 2 (Fig. 1) der als Sender tätigen Ausführung 1.1, 1.2, 1.3 oder 1.4 in vorteilhafter Art gesichert und nach der Übermittlung in der Einrichtung 2 der als Empfänger tätigen Ausführung 1.1, 1.2, 1.3 oder 1.4 zurückgewonnen wird.

Der erste Datenstrom 7 (Fig. 1) wird aus Datenpaketen $W_{1..e}$ gebildet, welche je eine Anzahl e gleich langer Datenworte $W_1$ bis $W_e$ mit der Wortlänge L umfassen. Wenn die Teilnehmerstation 1 als Sender tätig ist, wird in der ersten Transformationskette 15 die Information des erstens Datenstromes 7 paketweise gesichert, wobei der die gesicherte Information aufweisende zweite Datenstrom 9 aus Datenpaketen $Y_{1..f}$ gebildet ist, welche je eine Anzahl f gleich lange Datenworte $Y_1$ bis $Y_f$ der Wortlänge L umfassen. Mit Hilfe des Ausgangsmodules 5 wird der zweite Datenstrom 9 an die als Empfänger tätige Teilnehmerstation 1 übermittelt, wobei das Ausgangsmodul 5 die zur Übermittlung notwendigen Funktionen wie beispielsweise Anpassen an einen Übertragungskanal, Modulieren und Steuern der Verbindung ausführt.

In der als Empfänger tätigen Teilnehmerstation 1 ist der übermittelte dritte Datenstrom 11 ausgangsseitig des Eingangsmoduls 4 verfügbar, welches die zum Datenempfang notwendigen Funktionen wie beispielsweise Anpassen an einen Übertragungskanal, Demodulieren und Filtem ausführt. Der empfangene dritte Datenstrom 11 wird aus Datenpaketen $Y_{1..f}$ gebildet, welche je die Anzahl f gleich lange Datenworte $Y_1$ bis $Y_f$ mit der Wortlänge L umfassen. In der als Empfänger tätigen Teilnehmerstation 1 wird durch die zweite Transformationskette 16 die im dritten Datenstrom 11 gesichert enthaltene Information zurückgewonnen.

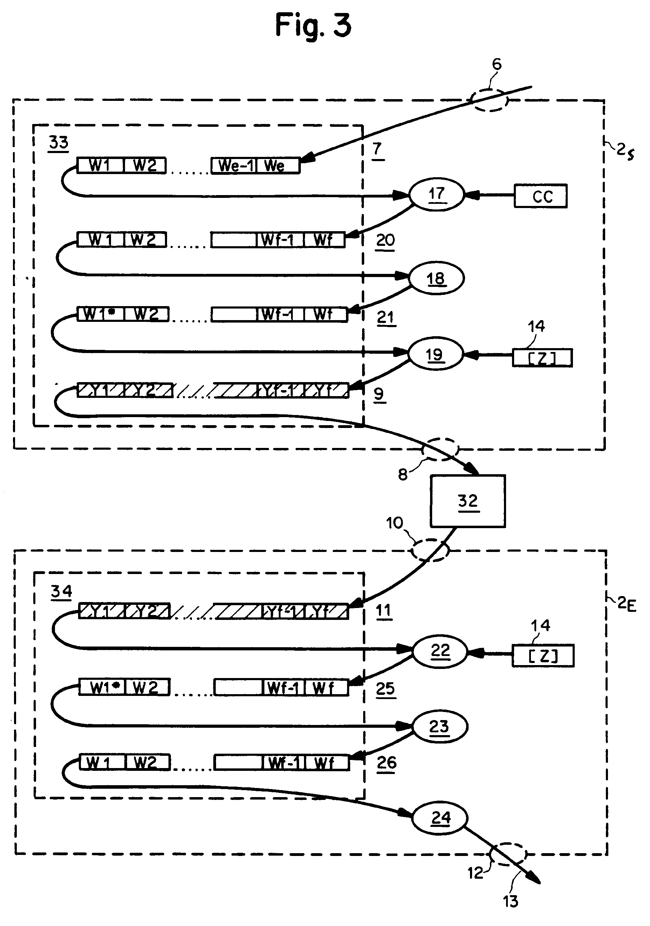

Ein vorteilhaftes Verfahren zum Sichern der Information eines Datenpaketes ist in der Fig. 3 dargestellt, aus der auch das Rückgewinnen der Information ersichtlich ist. Mit $2_S$ ist die Einrichtung 2 (Fig. 1) der als Sender tätigen Teilnehmerstation 1 bezeichnet, während $2_E$ die Einrichtung 2 der als Empfänger tätigen Teilnehmerstation 1 markiert. Die durch ein Kommunikationssystem 32 voneinander getrennten Einrichtungen $2_S$ und $2_E$ gehören in der Regel zu verschiedenen Ausführungen 1.1, 1.2, 1.3 und 1.4 (Fig. 2) der Teilnehmerstation 1.

Wird das Verfahren beispielsweise bei der Übertragung eines Datenpaketes von der dritten Ausführung 1.3 zur ersten Ausführung 1.1 angewendet, umfasst das Kommunikationssystem 32 mindestens das Ausgangsmodul 5 und den Anschluss 3 der dritten Ausführung 1.3, das Übertragungsmedium des Kommunikationsnetzes 30 sowie den Anschluss 3 und das Eingangsmodul 4 der ersten Ausführung 1.1.

Die Einrichtung $2_S$ weist einen Datenspeicher 33 zur Aufbereitung des zweiten Datenstromes 9 aus dem ersten Datenstrom 7 auf, während die Einrichtung $2_E$ über einen weiteren Datenspeicher 34 zur Rückgewinnung der gesicherten Information aus dem dritten Datenstrom 11 verfügt.

In einem ersten Verfahrensschritt wird sichergestellt, dass das zu sichernde, die Datenworte $W_1$ bis $W_e$ umfassende Datenpaket an einer vorbestimmten Position ein Datenwort aufweist, welches ein in einer vorbestimmten Zeitspanne T an der erwähnten Position zum Sichern einmalig benutztes Bitmuster aufweist, wodurch das Datenpaket in der Zeitspanne T einmalig ist. Der erste Verfahrensschritt wird mit Vorteil durch den ersten Transformationsblock 17 ausgeführt, indem ein aus den Datenworten $W_1$ bis $W_e$ gebildetes Datenpaket $W_{1..e}$ durch ein weiteres Datenwort CC der Wortlänge L ergänzt wird, so dass ein Datenpaket $W_{1..f}$ gebildet wird, welches die Datenworte $W_1$ bis $W_f$ umfasst, wobei f=e+1 ist und das Datenwort CC mit Vorteil am Ende des Datenpaketes $W_{1..e}$ angefügt wird, so dass das Datenwort zur Erreichung einer höheren Sicherheit im Datenpaket $W_{1..f}$ relativ spät verschlüsselt wird. Das Datenwort CC ist derart aufgebaut, dass es mit hoher Wahrscheinlichkeit in der Zeitspanne T, welche beispielsweise mehrere Tage beträgt, nur einmal generiert wird. Ein vorteilhafter Aufbau des Datenwortes CC wird erreicht, wenn das Datenwort CC durch eine Transformation $T_{CC}$ von mindestens Teilen des Datums und der Uhrzeit seiner Generierung berechnet wird.

In einem zweiten Verfahrensschritt wird das erste zu verschlüsselnde Datenwort $W_1$ des ergänzten Datenpaketes $W_{1..f}$ durch eine durch den zweiten Transformationsblock 18 ausführbare Transformation $T_W$ derart in ein Datenwort $W_1^*$ verändert, dass, wenn in der Sendeeinrichtung während der Zeitspanne T zwei jeweils identische erste Datenworte $W_1$ aufweisende Datenpakete $W_{1..e}$ zum Sichern anfallen, die ersten zu verschlüsselnden Datenworte $W_1^*$ in den beiden ergänzten Datenpakete $W_{1..f}$ voneinander verschieden sind. Die Transformation $T_W$ des zweiten Verfahrensschrittes ist mit Vorteil die Antivalenz-Operation des als erstes Datenwort zu verschlüsselnden Datenwortes $W_1$ mit dem Datenwort CC, wobei die Antivalenz-Operation in den beiden Datenworten $W_1$ und CC jeweils auf gleichwertige Bits angewendet und das erste Datenwort $W_1$ mit dem Resultat $W_1^*$ der erwähnten Antivalenz-Operation überschrieben wird. Die Antivalenz-Operation wird in der Digitaltechnik auch als logische Exklusiv-ODER-Funktion bzw. als XOR bezeichnet. In der Regel ist die Antivalenz-Operation für Datenworte in einem Mikroprozessor direkt als Maschinenbefehl verfügbar.

In einer der Programmiersprache Pascal ähnlichen Schreibweise, in welcher die Antivalenz-Operation mit dem Symbol ⊕ bezeichnet ist, wird die vorteilhafte Ausführung des zweiten Verfahrensschrittes wie folgt geschrieben:

$$\{T_W(W_1):\} \ W_1^* := W_1 \oplus CC \qquad\qquad [F1]$$

Beträgt die Wortlänge L beispielsweise vier Bit und hat das Datenwort CC den binären Wert 1010, während das erste Datenwort $W_1$ vor dem zweiten Verfahrensschritt den binären Wert 1001 aufweist, dann weist das erste Datenwort $W_1^*$ nach der vorteilhaften Ausführung des zweiten Verfahrensschrittes den binären Wert 0011 auf.

In einem dritten Verfahrensschritt wird das ergänzte Datenpaket $W_{1..f}$ durch vorteilhafte Anwendung des an sich bekannten Cipher-Feedback-Verfahrens verschlüsselt, wobei der Schlüssel Z verwendet und das erste Datenwort $W_1^*$ zuerst verschlüsselt wird. Mit Vorteil wird das ergänzte Datenpaket $W_{1..f}$ durch die Einrichtung 19 zum Verschlüsseln eines Datenpaketes verschlüsselt, wobei der zweite Datenstrom 9 mit gesicherter Information generiert wird, der vom Kommunikationssystem 32 auf die Einrichtung $2_E$ übertragbar ist, wo er als dritter Datenstrom 11 zur Rückgewinnung der gesicherten Information verfügbar ist.

Dadurch, dass das erste zu verschlüsselnde Datenwort $W_1$ mit der Transformation $T_W$ vor der Verschlüsselung in das Datenwort $W_1^*$ umgewandelt wird, sind durch das Cipher-Feedback-Verfahren vorteilhafterweise verschiedene Chiffrate generierbar, wenn mehrere zu sichernde Datenpakete jeweils identische erste Datenworte $W_1$ aufweisen, was die Sicherheit der Information bei der Übertragung erhöht.

Zur Rückgewinnung der gesicherten Information sind mit Vorteil zwei Schritte auszuführen, welche im wesentlichen durch das gezeigte Verfahren zum Sichern der Information bestimmt sind.

In einem ersten Schritt wird das verschlüsselte ergänzte Datenpaket $Y_{1..f}$ unter Anwendung des Cipher-Feedback-Verfahrens entschlüsselt, wobei wiederum der Schlüssel Z verwendet wird. Der erste Schritt wird mit Vorteil durch die Einrichtung 22 zum Entschlüsseln eines Datenpaketes ausgeführt, wobei der siebte Datenstrom 25 generiert wird, in welchem das ergänzte Datenpaket $W_{1..f}$ mit Ausnahme des ersten Datenwortes $W_1^*$ als Klartext - das heisst mit der unverschlüsselten Information - verfügbar ist.

In einem zweiten Schritt wird das erste Datenwort $W_1^*$ richtiggestellt, was vorteilhafterweise durch erneute Anwendung der Transformation $T_W$ ausgeführt wird.

Mit der Verwendung des Datenwortes CC und der mit ⊕ bezeichneten Antivalenz-Operation wird der zweite Schritt:

$$\{T_W(W_1^*):\} \ W_1 := W_1^* \oplus CC \qquad\qquad [F2]$$

Mit Vorteil wird der zweite Schritt durch den dritten Transformationsblock 23 ausgeführt.

Dadurch, dass die Transformation $T_W$ auf $W_1$ die Antivalenz-Operation mit CC ist, wird das erste zu verschlüsselnde Datenwort $W_1$ derart in ein Datenwort $W_1^*$ verändert, dass, wenn in der Sendeeinrichtung während der Zeitspanne T zwei jeweils identische erste Datenworte $W_1$ aufweisende Datenpakete $W_{1..e}$ zum Sichern anfallen, die ersten zu verschlüsselnden Datenworte $W_1^*$ in den beiden ergänzten Datenpakete $W_{1..f}$ voneinander verschieden sind, wobei das Datenwort $W_1$ in der Empfangseinrichtung durch Anwendung der Transformation $T_W$ auf $W_1^*$ mit wenig Aufwand sicher zurückgewonnen werden kann.

Nach dem zweiten Schritt ist die in gesicherter Form vom Kommunikationssystem 32 gelieferte Information im Datenpaket $W_{1..f}$ des achten Datenstromes 26 als Klartext verfügbar, wobei das Datenpaket $W_{1..f}$ auch noch das Datenwort CC umfasst, welches zur Prüfung der Authentizität verwendbar ist.

Mit Vorteil wird die Authentizität des die Datenworte $W_1$ bis $W_e$ umfassenden Datenpaketes $W_{1..e}$ durch den vierten Transformationsblock 24 durch Auswertung des Datenwortes CC festgestellt.

In der Empfangseinrichtung wird das die Datenworte $W_1$ bis $W_e$ aufweisende Datenpaket $W_{1..e}$ mit Vorteil nur dann akzeptiert, wenn das das Datenpaket $W_{1..e}$ ergänzende Datenwort CC einen vorbestimmten Wertebereich aufweist. Ist die Empfangseinrichtung beispielsweise Teil eines Elektrizitätszählers oder eines Tarifgerätes und weist das empfangene Datenpaket $W_{1..e}$ einen Befehl zur Umschaltung von Hochtarif auf Niedertarif auf, ist durch eine Analyse des Wertebereiches des Datenwortes CC in vorteilhafter Weise erkennbar, ob das Datenpaket $W_{1..e}$ authentisch oder etwa durch Dritte dupliziert worden ist.

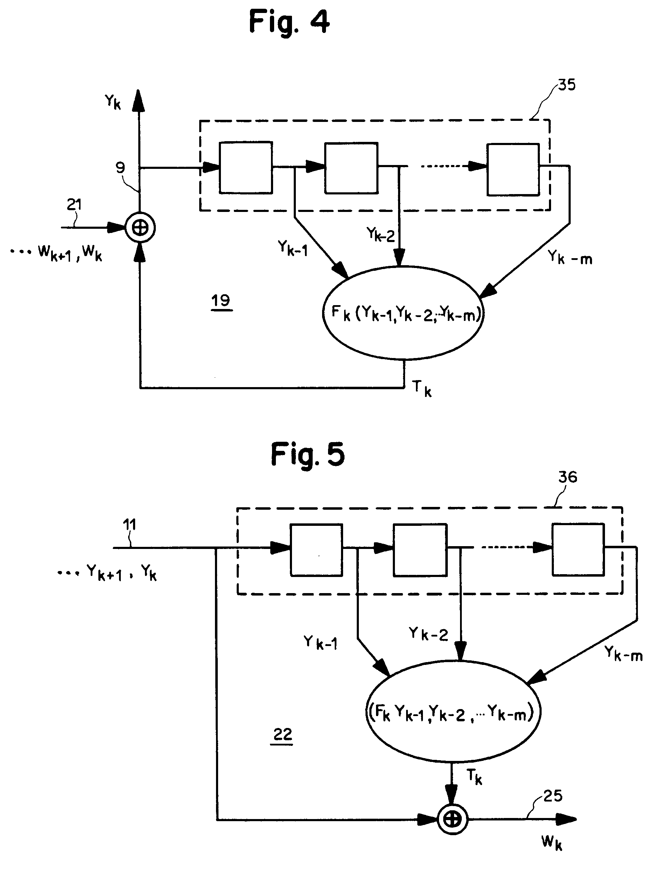

Eine in der Fig. 4 dargestellte vorteilhafte Ausführung der Einrichtung 19 zum Verschlüsseln eines Datenpaketes nach dem Cipher-Feedback-Verfahren weist ein m-stufiges Schieberegister 35 auf, durch welches eine Anzahl m verschlüsselter Datenworte $Y_{k-1}$ bis $Y_{k-m}$ zur Erzeugung eines verschlüsselten Datenwortes $Y_k$ für ein Datenwort $W_k$ verfügbar sind, wobei für den Index k ein Indexbereich von 1 bis f gilt. Durch das Schieberegister 35 sind die verschlüsselten Datenworte $Y_k$ bis $Y_{k-m+1}$ jeweils vor der Erzeugung des verschlüsselten Datenwortes $Y_{k+1}$ datenwortweise verschiebbar.

Das verschlüsselte Datenwort $Y_k$ ist das Resultat der Operation $W_k \oplus T_k$, wobei das Zeichen $\oplus$ für die Antivalenz-Operation auf das Datenwort $W_k$ und ein Datenwort $T_k$ der Wortlänge L ist und die Operation $W_k \oplus T_k$ zur Verschlüsselung des Datenwortes $W_{1..f}$ für jeden Indexwert k im Indexbereich 1 bis f durchzuführen ist. Das Datenwort $T_k$ ist der Funktionswert einer nichtlinearen Verknüpfung $F_k$ der verschlüsselten Datenworte $Y_{k-1}$ bis $Y_{k-m}$:

$$T_k := F_k(Y_{k-1}, Y_{k-2}, \ldots Y_{k-m}) \qquad [F3]$$

Eine in der Fig. 5 dargestellte vorteilhafte Ausführung der Einrichtung 22 zum Entschlüsseln eines Datenpaketes nach dem Cipher-Feedback-Verfahren weist ein m-stufiges Schieberegister 36 auf, durch welches eine Anzahl m verschlüsselter Datenworte $Y_{k-1}$ bis $Y_{k-m}$ zur Entschlüsselung eines verschlüsselten Datenwortes $Y_k$ verfügbar sind. Durch das Schieberegister 36 sind die verschlüsselten Datenworte $Y_k$ bis $Y_{k-m+1}$ jeweils vor der Entschlüsselung des Datenwortes $Y_{k+1}$ datenwortweise verschiebbar.

Ein unverschlüsselte Datenwort $W_k$ ist das Resultat der Operation $Y_k \oplus T_k$, wobei das Zeichen $\oplus$ für die Antivalenz-Operation auf das Datenwort $Y_k$ und ein Datenwort $T_k$ der Wortlänge L ist und die Operation $Y_k \oplus T_k$ zur Entschlüsselung des Datenwortes $Y_{1..f}$ für jeden Indexwert k im Indexbereich von 1 bis f durchzuführen ist. Das Datenwort $T_k$ ist der Funktionswert der nichtlinearen Verknüpfung $F_k$ der verschlüsselten Datenworte $Y_{k-1}$ bis $Y_{k-m}$.

In vorteilhafter Art ist die nichtlineare Verknüpfung $F_k$ durch Antivalenz-Operationen zwischen Summen verwirklicht, wobei eine Summe aus einer Zufallszahl und mindestens einem verschlüsselten Datenwort $Y_{k-1}$ bzw. $Y_{k-2}$ bzw. $Y_{k-m}$ gebildet ist.

Der im Cipher-Feedback-Verfahren verwendete Schlüssel Z weist eine Anzahl p Komponenten auf, wobei die Anzahl p auch als Schlüssellänge bezeichnet wird. Grundsätzlich ist mit einer Vergrösserung der Anzahl p - das heisst durch Vergrösserung der Schlüssellänge - eine höhere Sicherheit erreichbar.

Nachfolgend wird eine vorteilhafte Definition der nichtlinearen Verknüpfung $F_k$ angegeben, wobei die beiden Schieberegister 35 und 36 dreistufig sind und der Schlüssel Z sechs Komponenten aufweist; also gilt p=6.

Die angegebene Verknüpfung $F_k$ ist insbesondere zur Ausführung auf einem 8-Bit Mikrocomputer vorteilhaft, wenn auch die Wortlänge L der Datenworte $W_1$ bis $W_f$ des Datenpaketes $W_{1..f}$ acht Bit beträgt. Die beiden Schieberegister 35 und 36 sind mit Vorteil durch einen vom Mikrocomputer ausführbaren Code verwirklicht.

Aus dem Schlüssel $Z = (Z_1, Z_2, Z_3, Z_4, Z_5, Z_6)$, dessen sechs Komponenten $Z_1$ bis $Z_6$ ganze Zahlen im Bereich von 0 bis 255 sind, werden berechnet:

- ein erster Wert $c_4$ mit dem ganzzahligen Wertebereich [0 ... 1], der den Wert des Bits mit der höchsten Wertigkeit (most significant bit MSB) der vierten Schlüssel-Komponente $Z_4$ aufweist,
- ein zweiter Wert $c_5$ mit dem ganzzahligen Wertebereich [0 ... 1], der den Wert des Bits mit der höchsten Wertigkeit (most significant bit MSB) der fünften Schlüssel-Komponente $Z_5$ aufweist,
- ein dritter Wert $c_6$ mit dem ganzzahligen Wertebereich [0 ... 1], der den Wert des Bits mit der höchsten Wertigkeit (most significant bit MSB) der sechsten Schlüssel-Komponente $Z_6$ aufweist,
- ein vierter Wert $b_4$ mit dem ganzzahligen Wertebereich [0 ... 127], der den Wert der vierten Schlüssel-Komponente $Z_4$ ohne Bit mit der höchsten Wertigkeit (MSB) aufweist,
- ein fünfter Wert $b_5$ mit dem ganzzahligen Wertebereich[0 ... 127], der den Wert der fünften Schlüssel-Komponente $Z_5$ ohne Bit mit der höchsten Wertigkeit (MSB) aufweist,
- ein sechster Wert $b_6$ mit dem ganzzahligen Wertebereich [0 ... 127], der den Wert der sechsten Schlüssel-Komponente $Z_6$ ohne Bit mit der höchsten Wertigkeit (MSB) aufweist,
- ein erster Koeffizient B1 nach der Formel

$$B1 := 2 * b_4 + 1 \qquad [F4]$$

- ein zweiter Koeffizient B2 nach der Formel

$$B2 := 2 * b_5 + 1 \qquad\qquad [F5]$$

- ein dritter Koeffizient B3 nach der Formel

$$B3 := 2 * b_6 + 1 \qquad\qquad [F6]$$

- ein erster Startwert $Y_0$ nach der Formel

$$Y_0 := 131 + c_4 \qquad\qquad [F7]$$

- ein Zweiter Startwert $Y_{-1}$ nach der Formel

$$Y_{-1} := 11 + c_5 \qquad\qquad [F8]$$

- ein dritter Startwert $Y_{-2}$ nach der Formel

$$Y_{-2} := 67 + c_6 \qquad\qquad [F9]$$

- ein vierter Startwert $R1_0$ nach der Formel

$$R1_0 := Z_1 \qquad\qquad [F10]$$

- ein fünfter Startwert $R2_0$ nach der Formel

$$R2_0 := Z_2 \qquad\qquad [F11]$$

- und noch ein sechster Startwert $R3_0$ nach der Formel

$$R3_0 := Z_3 \qquad\qquad [F12]$$

Mit einer ersten Konstante A1=65, einer zweiten Konstante A2=5 und einer dritten Konstante A3=33 wird für jeden Indexwert k im Indexbereich von 1 bis f berechnet:

- eine erste auf acht Bit beschränkte Zusfallszahl $R1_k$ mittels eines ersten Zufallsgenerators nach der Formel

$$R1_k := [A1 * R1_{k-1} + B1]_{\bmod 256} \qquad\qquad [F13]$$

- eine zweite auf acht Bit beschränkte Zusfallszahl $R2_k$ mittels eines zweiten Zufallsgenerators nach der Formel

$$R2_k := [A2 * R2_{k-1} + B2]_{\bmod 256} \qquad\qquad [F14]$$

- eine dritte auf acht Bit beschränkte Zusfallszahl $R3_k$ mittels eines dritten Zufallsgenerators nach der Anweisung
  if (k mod 251) not_equal 1 then

$$R3_k := [A3 * R3_{k-1} + B3]_{\bmod 256}$$

  else

$$R3_k := [A3 * R3_0 + B3]_{\bmod 256} \qquad\qquad [F15]$$

  end if

- und schliesslich die auf acht Bit beschränkte nichtlineare Verknüpfung $F_k$ nach der Formel

$$F_k := [R1_k + Y_{k-1}]_{\bmod 256} \oplus [R2_k + Y_{k-1} + Y_{k-2}]_{\bmod 256} \oplus [R3_k + Y_{k-1} + Y_{k-3}]_{\bmod 256} \qquad\qquad [F16]$$

Die vorteilhafte Transformation $F_k$ benutzt die drei nach den Formeln [F13] bzw. [F14] bzw. [F15] arbeitenden Zufalls-generatoren $R1_k$, $R2_k$ und $R3_k$, welche derart ausgelegt sind, dass das kleinste gemeinsame Vielfache aller Perioden möglichst gross ist.

Bei Bedarf ist die vorteilhafte Transformation $F_k$ durch weitere Zufallsgeneratoren erweiterbar.

Eine hohe Sicherheit der Information im verschlüsselten Datenpaket $Y_{1..f}$ wird insbesondere durch die Kombination von drei in der Einrichtung 2 (Fig. 1) ausführbaren Verfahrensschritten erreicht, nämlich dadurch, dass

1) das Datenpaket $W_{1..e}$ durch das Datenwort CC ergänzt wird, dass weiter

2) das erste zu verschlüsselnde Datenwort $W_1$ durch die Transformation $T_W$ nach der Formel [F1] verändert wird und dass

3) im Cipher-Feedback-Verfahren das Datenwort $T_k$ verwendet wird, welches durch eine nichtlineare Transformation $F_k$ aus verschlüsselten Datenworten $Y_k$ bis $Y_{k-m+1}$ generiert wird.

Das offenbarte Verfahren zum Sichern der Information eines Datenpaketes ist - wie insbesondere die Formeln [F1] und [F16] eindrücklich zeigen - durch kostengünstige Mikroprozessoren oder Mikrocomputer - beispielsweise durch den MC68HC11 der Firma Motorola - ausführbar. Das Verfahren ist mit Vorteil auch in Kommunikationsnetzen mit unzuverlässigen Übertragungskanälen einsetzbar, da durch die Verwendung des ergänzenden Datenwortes CC in Kombination mit der Transformation $T_w$ des ersten zu verschlüsselnden Datenwortes $W_1$ in das Datenwort $W_1{}^*$ eine aufwendige Synchronisation von Verschlüsselungs- bzw. Entschlüsselungsalgorithmen entfallen kann.

**Patentansprüche**

1. Verfahren zum Sichern der Information eines mehrere Datenworte umfassenden Datenpaketes ($W_{1..e}$) bei der Übertragung zwischen einer an einem Übertragungsmedium angeschlossenen Sendeeinrichtung (1; $2_S$) und einer am Übertragungsmedium angeschlossenen Empfangseinrichtung (1; $2_E$), wobei unter Anwendung des Cipher-Feedback-Verfahrens in der Sendeeinrichtung (1; $2_S$) die unverschlüsselte Information des Datenpaketes ($W_{1..e}$) verschlüsselt und in der Empfangseinrichtung (1; $2_E$) die verschlüsselte Information entschlüsselt wird, **dadurch gekennzeichnet,**

dass das unverschlüsselte Datenpaket ($W_{1..e}$) an einer vorbestimmten Position durch ein Datenwort (CC) ergänzt wird, welches ein in einer vorbestimmten Zeitspanne T an der Position zum Sichern einmalig benutztes Bitmuster aufweist, wodurch ein in der Zeitspanne T einmaliges ergänztes Datenpaket ($W_{1..f}$) generiert wird,

dass das ergänzte Datenpaket ($W_{1..f}$) in gleich langen Einheiten unter Anwendung des Cipher-Feedback-Verfahrens sequentiell verschlüsselt bzw. entschlüsselt wird, wobei eine Einheit jeweils ein Datenwort ($W_k$; $Y_k$) ist, und

dass das erste zu verschlüsselnde Datenwort ($W_1$) des ergänzten Datenpaketes ($W_{1..f}$) durch eine Transformation derart verändert wird, dass, wenn in der Sendeeinrichtung (1; $2_S$) während der Zeitspanne T zwei jeweils identische erste Datenworte ($W_1$) aufweisende Datenpakete ($W_{1..e}$) zum Sichern anfallen, die ersten zu verschlüsselnden Datenworte ($W_1$) in den beiden ergänzten Datenpakete ($W_{1..f}$) voneinander verschieden sind.

2. Verfahren nach Anspruch 1, **dadurch gekennzeichnet,**

dass ein verschlüsseltes Datenwort ($Y_k$) durch die Antivalenz-Operation des unverschlüsselten Datenwortes ($W_k$) und einem weiteren Datenwort ($T_k$) generiert wird, wobei das weitere Datenwort ($T_k$) durch eine nichtlineare Verknüpfung ($F_k$) einer Anzahl (m) verschlüsselter Datenworte ($Y_{k-1}, Y_{k-2}, ..., Y_{k-m}$) erzeugt wird.

3. Verfahren nach Anspruch 2, **dadurch gekennzeichnet,**

dass die nichtlineare Verknüpfung ($F_k$) durch Antivalenz-Operationen zwischen Summen verwirklicht ist, wobei eine Summe aus einer Zufallszahl ($R1_k$; $R2_k$; $R3_k$) und mindestens einem verschlüsselten Datenwort ($Y_{k-1}$; $Y_{k-2};...$; $Y_{k-m}$) gebildet ist.

4. Verfahren nach einem der vorangehenden Ansprüche, **dadurch gekennzeichnet,**

dass das einmalig benutzte Bitmuster des das Datenpaket ($W_{1..e}$) ergänzenden Datenwortes (CC) aus dem aktuellen Datum und der Uhrzeit erzeugt wird.

5. Verfahren nach einem der vorangehenden Ansprüche, **dadurch gekennzeichnet,**

dass in der Sendeeinrichtung das erste zu verschlüsselnde Datenwort ($W_1$) durch die Antivalenz-Operation mit dem das Datenpaket ($W_{1..e}$) ergänzenden Datenwort (CC) verändert wird.

6. Einrichtung zum Sichern der Information eines mehrere Datenworte umfassenden Datenpaketes ($W_{1..e}$) bei der Übertragung zwischen einer an einem Übertragungsmedium angeschlossenen Sendeeinrichtung (1; $2_S$) und einer am Übertragungsmedium angeschlossenen Empfangseinrichtung (1; $2_E$), wobei unter Anwendung des Cipher-Feedback-Verfahrens in der Sendeeinrichtung (1; $2_S$) die unverschlüsselte Information verschlüsselt und in der Empfangseinrichtung (1; $2_E$) die verschlüsselte Information entschlüsselt wird, **gekennzeichnet durch**

eine einen Schlüssel (Z) aufweisende Speichereinheit (14), eine einen Speicher (33) aufweisende Transformationskette (15) mit einen ersten Transformationsblock (17) vor einem zweiten Transformationsblock (18) und einer dem zweiten Transformationsblock (18) nachgeschalteten, mit der Speichereinheit (14) verbundenen Einrichtung (19) zum Verschlüsseln von Datenpaketen unter Verwendung des Schlüssels (Z), wobei der erste Transformationsblock (17) derart ausgestaltet ist, dass das Datenpaket ($W_{1..e}$) um ein Datenwort (CC) ergänzbar ist, welches ein in einer vorbestimmten Zeitspanne (T) zum Sichern einmalig benutztes Bitmuster aufweist, und der zweite Transformationsblock (18) derart ausgestaltet ist, dass das erste zu verschlüsselnde Datenwort ($W_1$) des Datenpaketes ($W_{1..e}$) mittels einer Antivalenz-Operation mit dem das Datenpaket ($W_{1..e}$) ergänzenden Datenwort (CC) veränderbar ist und die mit der Speichereinheit (14) verbundene Einrichtung (19) derart ausgestaltet ist, dass das Cipher-Feedback-Verfahren durchführbar ist.

## Claims

1. A method of safeguarding the information of a data packet ($W_{1...e}$) including a plurality of data words in transmission between a transmitting device (1; $2_S$) connected to a transmission medium and a receiving device (1; $2_E$) connected to the transmission medium, wherein using the cipher feedback method the unencrypted information of the data packet ($W_{1...e}$) is encrypted in the transmitting device (1; $2_S$) and the encrypted information is decrypted in the receiving device (1; $2_E$), characterised in that

the unencrypted data packet ($W_{1;e}$) is supplemented at a predetermined position by a data word (CC) which has a bit pattern used once in a predetermined period of time at the position for safeguarding purposes. whereby a supplemented data packet ($W_{1...f}$) which is unique in the period of time is generated, that the supplemented data packet ($W_{1...f}$) is sequentially encrypted and decrypted in units of equal length using the cipher feedback method, wherein a unit is a respective data word ($W_k$; $Y_k$), and that the first data word ($W_1$) to be encrypted of the supplemented data packet ($W_{1...f}$) is modified by a transformation operation in such a way that, when two data packets ($W_{1...e}$) which respectively have identical first data words ($W_1$) occur in the transmitting device (1; $2_S$) during the period of time for safeguarding purposes, the first data words ($W_1$) to be encrypted in the two supplemented data packets ($W_{1...f}$) are different from each other.

2. A method according to claim 1 characterised in that an encrypted data word ($Y_k$) is generated by the exclusive OR operation of the unencrypted data word ($W_1$) and a further data word ($T_k$), wherein the further data word ($T_k$) is produced by non-linear linking ($F_k$) of a number (m) of encrypted data words ($Y_{k-1}$, $Y_{k-2}$, ..., $Y_{k-m}$).

3. A method according to claim 2 characterised in that the non-linear linking ($F_k$) is implemented by exclusive OR operations between sums, wherein a sum is formed from a random number ($R1_k$; $R2_k$; $R3_k$) and at least one encrypted data word ($Y_{k-1}$; $Y_{k-2}$; ...; $Y_{k-m}$).

4. A method according to one of the preceding claims characterised in that the uniquely used bit pattern of the data word (CC) supplementing the data packet ($W_{1...e}$) is produced from the current date and the clock time.

5. A method according to one of the preceding claims characterised in that in the transmitting device the first data word ($W_1$) to be encrypted is modified by the exclusive OR operation with the data word (CC) supplementing the data packet ($W_{1...e}$).

6. Apparatus for safeguarding the information of a data packet ($W_{1...e}$) including a plurality of data words in transmission between a transmitting device (1; $2_S$) connected to a transmission medium and a receiving device (1; $2_E$) connected to the transmission medium, wherein using the cipher feedback method the unencrypted information is encrypted in the transmitting device (1; $2_S$) and the encrypted information is decrypted in the receiving device (1; $2_E$), characterised by a storage unit (14) having a key (Z), a transformation chain (15) which has a storage means (33) and a first transformation block (17) upstream of a second transformation block (18) and a device (19) which is connected downstream of the second transformation block (18) and which is connected to the storage unit (14) for encrypting data packets using the key (Z), wherein the first transformation block (17) is such that the data packet ($W_{1...e}$) can be supplemented by a data word (CC) having a bit pattern which is used once in a predetermined period of time (T) for safeguarding purposes, and the second transformation block (18) is such that the first data word ($W_1$) to be encrypted of the data packet ($W_{1...e}$) can be modified by means of an exclusive OR operation with the data word (CC) supplementing the data packet ($W_{1...e}$) and the device (19) connected to the storage unit (14) is such that the cipher feedback method can be carried into effect.

**Revendications**

1. Procédé pour protéger l'information d'un paquet de données ($W_{1..e}$) comprenant plusieurs mots de données lors de la transmission entre un dispositif d'émission (1 ; $2_S$) connecté à un support de transmission, et un dispositif de réception (1 ; $2_E$) connecté à un support de transmission où, en utilisant le procédé par réaction de chiffrage, l'information non codée du paquet de données ($W_{1..e}$) est codée dans le dispositif d'émission (1 ; $2_S$), l'information codée étant décodée dans le dispositif de réception (1 ; $2_E$),
caractérisé

en ce que le paquet de données ($W_{1..e}$) non codé est complété, au niveau d'une position prédéterminée, par un mot de données (CC) qui présente, dans un laps de temps prédéterminé T, au niveau de la position de protection, une configuration binaire utilisée une seule fois, grâce à quoi est généré un paquet de données ($W_{1..f}$) complété une seule fois dans le laps de temps T,
en ce que le paquet de données complété ($W_{1..f}$) est codé ou décodé séquentiellement dans des unités de même longueur, en utilisant le procédé par réaction de chiffrage, où une unité est à chaque fois un mot de données ($W_k$ ; $Y_k$), et
en ce que le premier mot de données ($W_1$) à coder du paquet de données ($W_{1..f}$) complété est modifié par une transformation de façon telle que, lorsque dans le dispositif d'émission (1 ; $2_S$), au cours du laps de temps T, il se produit, pour la protection, des paquets de données ($W_{1..e}$) présentant deux premiers mots de données ($W_1$), à chaque fois identiques, les premiers mots de données ($W_1$) à coder diffèrent l'un de l'autre dans les deux paquets de données complétés ($W_{1..f}$).

2. Procédé selon la revendication 1, caractérisé en ce qu'un mot de données ($Y_k$) codé est généré par l'opération d'antivalence du mot de données ($W_k$) non codé et est généré à un autre mot de données ($T_k$) où l'autre mot de données ($T_k$) est produit par une jonction non linéaire ($F_k$) d'un nombre (m) de mots de données codés ($Y_{k-1}$, $Y_{k-2}$, .., $Y_{k-m}$).

3. Procédé selon la revendication 2, caractérisé en ce que la jonction non linéaire ($F_k$) est réalisée par des opérations d'antivalence entre des sommes, où une somme est constituée par un nombre aléatoire ($R1_k$ ; $R2_k$ ; $R3_k$) et par au moins un mot de données codé ($Y_{k-1}$ ; $Y_{k-2}$,.. ; $Y_{k-m}$).

4. Procédé selon l'une quelconque des revendications précédentes, caractérisé en ce que la configuration binaire utilisée une seule fois du mot de données (CC) complétant le paquet de données ($W_{1..e}$) est produit à partir de la date réelle et de l'heure.

5. Procédé selon l'une quelconque des revendications précédentes, caractérisé en ce que, dans le dispositif d'émission, le premier mot de données ($W_1$) à coder est modifié par l'opération d'antivalence avec le mot de données (CC) complétant le paquet de données ($W_{1..e}$).

6. Dispositif de protection de l'information d'un paquet de données ($W_{1..e}$) comprenant plusieurs mots de données lors de la transmission entre un dispositif d'émission (1 ; $2_S$) connecté à un support de transmission, et un dispositif de réception (1 ; $2_E$) connecté à un support de transmission où, en utilisant le procédé par réaction de chiffrage, l'information non codée est codée dans le dispositif d'émission (1 ; $2_S$), l'information codée étant décodée dans le dispositif de réception (1 ; $2_E$),
caractérisé

par une unité de mémoire (14) présentant une clé (Z), une chaîne de transformation (15) comportant une mémoire (33), avec un premier bloc de transformation (17) monté en amont d'un second bloc de transformation (18) et avec un dispositif (19) monté en aval du second bloc de transformation (18) et relié à l'unité de mémoire (14), pour coder des paquets de données en utilisant la clé (Z), où le premier bloc de transformation (17) est configuré de façon telle que le paquet de données ($W_{1..e}$) peut être complété par un mot de données (CC) qui présente, dans un laps de temps prédéterminé (T), une configuration binaire utilisée une seule fois pour la protection, et où le second bloc de transformation (18) est configuré de façon telle que le premier mot de données ($W_1$) à coder du paquet de données ($W_{1..e}$) peut être modifié au moyen d'une opération d'antivalence avec le mot de données (CC) complétant le paquet de données ($W_{1..e}$) et où le dispositif (19) relié à l'unité de mémoire (14) est configuré de façon telle que le procédé de réaction de chiffrage est réalisable.

# Fig. 1

# Fig. 2

# Fig. 3

# Fig. 4

# Fig. 5